**Europäisches Patentamt**

**European Patent Office**

**Office européen des brevets**

(19)

(11) Publication number : **0 349 938 B1**

(12) **EUROPEAN PATENT SPECIFICATION**

(45) Date of publication of patent specification :
25.03.92 Bulletin 92/13

(51) Int. Cl.⁵ : **F16J 9/00, F16J 15/16**

(21) Application number : **89112056.0**

(22) Date of filing : **01.07.89**

(54) **Sealing structure.**

(30) Priority : **05.07.88 DK 3735/88**

(43) Date of publication of application :
**10.01.90 Bulletin 90/02**

(45) Publication of the grant of the patent :
**25.03.92 Bulletin 92/13**

(84) Designated Contracting States :
**AT BE CH DE ES FR GB GR IT LI LU NL SE**

(56) References cited :
**DE-A- 2 027 334**
**DE-A- 2 324 178**
**FR-A- 2 366 497**
**US-A- 875 095**

(73) Proprietor : **W.S. Shamban Europa A/S**
**No. 17, Fabriksvej**
**DK-3000 Helsingor (DK)**

(72) Inventor : **Hom, Jorgen**
**Mothsvej 12B**
**DK-2840 Holte (DK)**

(74) Representative : **Vingtoft, Knud Erik et al**
**Plougmann & Vingtoft Sankt Annae Plads 11**
**P.O. Box 3007**
**DK-1021 Copenhagen K (DK)**

EP 0 349 938 B1

## Description

The present invention relates to a sealing structure comprising a body member having a peripheral surface defining a first annular channel in which annular sealing members or sealing rings are received.

An endless sealing ring, which is to be mounted in such a channel must be made from an elastic, stretchable material to allow the sealing ring to be mounted. During use the annular sealing member or sealing ring may be exposed to axially directed frictional forces tending to draw the sealing member out from the channel in which it is received. Thus, when the sealing member is mounted in a channel formed in the outer peripheral surface of a piston-like member or in the inner peripheral surface of a cylinder-like member cooperating therewith, the mutual reciprocating movement of the piston-like and cylinder-like members may cause the sealing member to be partly or totally drawn out from the annular channel and into the narrow space defined between the cooperating piston-like and cylinder-like members, whereby the sealing member becomes inactive.

US-A- 875,095 discloses a two-part piston ring or packing for use in pistons for pumps. The piston ring comprises a main ring having a conical wall and a slitted supplemental ring fitting thereagainst. Both rings are made from a flexible, relatively stiff material, and springs arranged intermediate the rings tend to spread the rings laterally by wedging action. However, a sealing structure of this known type cannot include a sealing ring of a relatively soft, elastic material.

The present invention provides an improved sealing structure of the type comprising a body member having a peripheral surface defining a first annular channel therein, a first annular sealing member being received in said first channel and having a cross-sectional shape so as to define a second annular channel, the cross-sectional shape of the second channel having a constriction radially spaced from the bottom of the channel at least at one side of the first sealing member, and a second flexible slitted annular sealing member received in the second channel and having a cross-sectional shape which is substantially complementary to the cross-sectional shape of the second channel, the sealing structure according to the invention being characterized in that the first annular sealing member is an endless ring, which is made from an elastic, stretchable material, and that the second annular sealing member is made from a flexible, more stiff material, whereby the second sealing member may be mounted and safely retained in the second channel after mounting the first sealing member in the first channel. Thus, the relatively stiff second sealing member may serve as a backing ring for the stretchable first sealing member, so that the stretchable elastic ring does not tend to be drawn out from the first channel during use by frictional forces as described above.

In the sealing structure according to the invention, the slitted second sealing member need not necessarily have a permanent annular shape prior to the mounting thereof in the second channel. As an example, the second sealing member may be a string-like length of a suitable material having a cross-sectional shape corresponding to the cross-sectional shape of the second channel, and when such length is successively pressed into that channel it may snap into engagement with and be retained in the second channel by the channel constriction. Thus, the string-like length attains an annular shape when it is mounted and may maintain this shape because of the snap fastener-like engagement between the sealing member and the walls of the second channel.

The body member mentioned above may be a piston or a piston-like member having the first annular channel formed in its outer peripheral surface, or it may be a cylinder-like member having the first annular channel formed in its inner peripheral surface. The body member may then for example be made from metal, plastic, or another suitable material. While the sealing structure need not comprise more than a single second sealing member, a second channel is preferably defined at each side of the first sealing member between an annular side wall part of the first sealing member and an opposite, adjacent annular side wall part of the first channel.

hydraulic cylinder. The piston member 11 has a number of axially spaced annular channels 14 and 15 for receiving annular sealing members 16, which may or may not encircle an underlying O-ring 17.

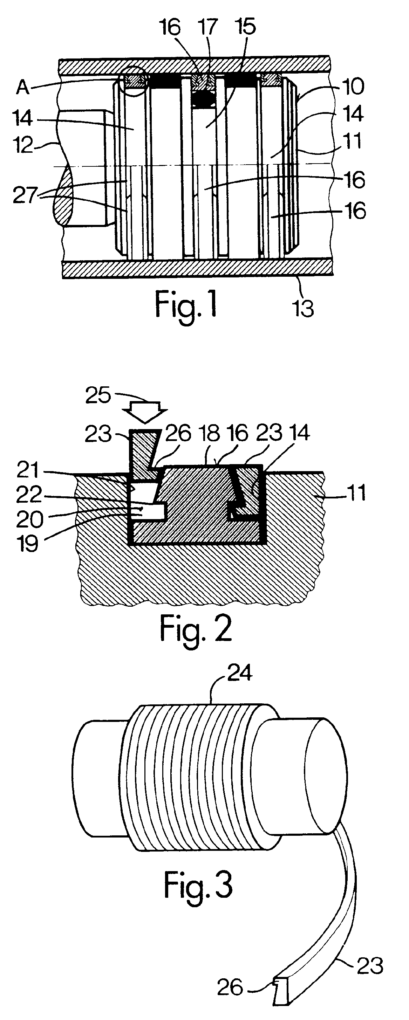

One or more of the sealing members 16 may be of the type shown in Fig. 2.

The sealing member shown in Fig. 2 comprises a sealing ring 18 having an annular recess 19 formed in at least one end surface thereof so as to define an outwardly open annular channel 20 between the sealing ring 18 and the adjacent side wall 21 of the channel 14. A barb-like projection 22 formed on the sealing ring 18 and projecting into the recess 19 defines an annular constriction of the channel 20. The sealing ring 18 may be made from a relatively resilient material, such as plastic or rubber, so that the closed sealing ring 18 may be expanded radially to such an extent that it may be passed over the annular peripheral wall parts of the piston member 11 separating the channels 14 and 15 when the sealing ring 18 is to be mounted in one of these channels. When the sealing ring 18 has been mounted in the channel 14 as best shown in Fig. 2, a suitable length of a strip material 23 having a cross-sectional shape, which is substantially complementary to the cross-sectional shape of the annular channel 20, may be cut from a coil 24 or another supply. Thereafter, this strip material may be pressed radially inwardly into the annular channel 20 as indicated by an arrow 25 in Fig. 2, whereby a nose-like projection 26 on the strip material 23 will snap into locking engagement with the barb-like projection 22 of the sealing ring 18. When the length of strip material 23 has been fully mounted within the channel 20, this length of strip material will form a slitted sealing ring having free ends 27 positioned closely adjacent to each other as shown in Fig. 1. The strip material 23 may be made from a flexible, but relatively stiff and hard plastic material, which may support or reinforce the sealing ring 18 in which it is inserted. Thus, the relatively resilient sealing ring 18 may be combined with one or more other sealing rings 23 which is made from a material, which is not sufficiently resilient to be inserted into the receiving channel 14 or 15 of the piston member 11 without being slitted. In order to facilitate insertion of the strip material 23 into the channel 20, the channel preferably has a relatively wide opening, while the axial width of the channel is gradually reducing towards the barb-like projection 22.

The strip material 23 may be made from any suitable plastic or rubber material, but could also be made from metal, such as aluminum, brass, copper, bronze, or any other metal conventionally used for bearings.

While the invention has been described above in connection with sealing rings arranged on an outer peripheral surface for sealing against a corresponding inner cylindrical surface, it should be understood that the invention could also be used in connection with sealing rings arranged on an inner peripheral surface for sealing against a corresponding outer peripheral surface. If desired, the strip material 23 could be mounted at one side surface of the sealing ring 18 only, or the strip material could additionally be mounted in one or more annular channels formed in the central part of the sealing ring 18.

## Claims

1. A sealing structure comprising a body member (11) having a peripheral surface defining a first annular channel (14, 15) therein, a first annular sealing member (18) being received in said first channel (14, 15) and having a cross-sectional shape so as to define a second annular channel (20), the cross-sectional shape of the second channel (20) having a constriction (22) radially spaced from the bottom of the channel at least at one side of the first sealing member (18), and a second flexible slitted annular sealing member (23) received in the second channel (20) and having a cross-sectional shape which is substantially complementary to the cross-sectional shape of the second channel (20), characterized in that the first annular sealing member (18) is an endless ring, which is made from an elastic, stretchable material, and that the second annular sealing member (23) is made from a flexible, more stiff material, whereby the second sealing member (23) may be mounted and safely retained in the second channel (20) after mounting the first sealing member (18) in the first channel (14, 15).

2. A sealing structure according to claim 1, characterized in that the said second channel (20) is defined at each side of the first sealing member between an annular side wall part of the first sealing member (18) and an opposite, adjacent, annular side wall part of the first channel (14, 15).

3. A sealing structure according to claim 1 or 2, characterized in that the said constriction (22) is formed by an undercutting in a side wall part of the first sealing member (18).

4. A sealing structure according to any of the claims 1-3, characterized in that the first and second sealing members (18, 23) commonly define a smooth cylindrical sealing surface for sealingly engaging with a complementary cylindrical surface defined on a second body member (13).

5. A sealing structure according to claim 3 or 4, characterized in that the side wall part of the first sealing member (18) comprises an inclined surface part extending inwardly from the opening of the second channel (20) toward said constriction (22) so as to define a funnel-like channel entrance

6. A sealing structure according to any of the claims 1-5, characterized in that the second sealing member (23) has been cut from a length of strip material.

7. A sealing structure according to any of the claims 1-6, characterized in that said body member (11) is a piston-like member.

## Patentansprüche

1. Eine Dichtungsstruktur mit einem Körperteil (11) mit einer darin einen ersten ringförmigen Kanal (14, 15) bildenden Umfangsfläche, einem im ersten Kanal (14, 15) aufgenommenen ersten ringförmigen Dichtelement (18) mit einer Querschnittsform, um einen zweiten ringförmigen Kanal (20) zu bilden, wobei die Querschnittsform des zweiten Kanals (20) eine Verengung (22) besitzt, die radial im Abstand vom Boden des Kanals mindestens an einer Seite des ersten Dichtelementes (18) angeordnet ist, und mit einem zweiten im zweiten Kanal (20) aufgenommenen, flexiblen, geschlitzten, ringförmigen Dichtelement (23) mit einer Querschnittsform, die im wesentlichen komplementär zur Querschnittsform des zweiten Kanals (20) ist, dadurch gekennzeichnet, daß das erste ringförmige Dichtelement (18) ein Endlosring ist, der aus elastischem, dehnbarem Material besteht,und daß das zweite ringförmige Dichtelement (23) aus flexiblem, steiferem Material besteht, wodurch das zweite Dichtelement (23) nach Befestigung des ersten Dichtelementes (18) im ersten Kanal (14, 15) im zweiten Kanal (20) befestigt und sicher darin gehalten werden kann.

2. Dichtungsstruktur nach Anspruch 1, dadurch gekennzeichnet, daß der zweite Kanal (20) an jeder Seite des ersten Dichtelementes zwischen einem ringförmigen Seitenwandteil des ersten Dichtelementes (18) und einem gegenüberliegenden, benachbarten, ringförmigen Seitenwandteil des ersten Kanals (14, 15) gebildet ist.

3. Dichtungsstruktur nach Anspruch 1 oder 2, dadurch gekennzeichnet, daß die Verengung (22) durch Unterschneiden in einem Seitenwandteil des ersten Dichtelementes (18) ausgebildet ist.

4. Dichtungsstruktur nach einem der Ansprüche 1 bis 3, dadurch gekennzeichnet, daß die ersten und zweiten Dichtelemente (18, 23) gemeinsam eine weiche zylindrische Dichtfläche für einen dichtenden Eingriff mit einer auf einem zweiten Körperteil (13) gebildeten komplementären zylindrischen Oberfläche bilden.

5. Dichtungsstruktur nach Anspruch 3 oder 4, dadurch gekennzeichnet, daß das Seitenwandteil des ersten Dichtelementes (18) ein geneigtes Oberflächenteil aufweist, das sich von der Öffnung des zweiten Kanals (20) nach innen zur Verengung (22) erstreckt, um einen trichterförmigen Kanaleingang zu bilden.

6. Dichtungsstruktur nach einem der Ansprüche 1 bis 5, dadurch gekennzeichnet, daß das zweite Dichtelement (23) aus einer Länge von Streifenmaterial herausgeschnitten ist.

7. Dichtungsstruktur nach einem der Ansprüche 1 bis 6, dadurch gekennzeichnet, daß der Körperteil (11) ein kolbenähnliches Teil ist.

## Revendications

1. Un anneau de garniture comprenant un élément de corps (11) ayant une surface périphérique y définissant une première rainure annulaire (14, 15), un premier élément de garniture annulaire (18) étant reçu dans ladite première rainure (14, 15) et ayant une section droite de façon à définir une seconde rainure annulaire (20), la section droite de la seconde rainure (20) ayant un resserrement (22) qui est radialement espacé du fond de la rainure au niveau d'au moins l'un des côtés du premier élément de garniture (18), et un second élément de garniture annulaire fendu et souple (23) étant reçu dans la seconde rainure (20) et ayant une section droite qui est substantiellement complémentaire par rapport à la section droite de la seconde rainure (20),

caractérisé en ce que le premier élément de garniture annulaire (18) est une bague sans fin, fabriquée à partir d'un matériau élastique pouvant être étiré, et en ce que le second élément de garniture annulaire (23) est fabriqué à partir d'un matériau souple plus rigide, ce qui fait que le second élément de garniture (23) peut être monté et retenu de façon sure dans la seconde rainure (20) après que le premier élément de garniture (18) ait été monté dans la première rainure (14, 15).

2. Un anneau de garniture selon la revendication 1, caractérisé en ce que ladite seconde rainure (20) est définie de chaque côté du premier élément de garniture entre une partie de paroi latérale annulaire du premier élément de garniture (18) et une partie de paroi latérale annulaire adjacente et opposée de la première rainure (14, 15).

3. Un anneau de garniture selon la revendication 1 ou 2, caractérisé en ce que ledit resserrement (22) est formé par un renfoncement dans une partie de paroi latérale du premier élément de garniture (18).

4. Un anneau de garniture selon l'une des revendications 1 à 3, caractérisé en ce que les premiers et seconds éléments de garniture (18, 23) définissent en général une surface de garniture cylindrique lisse permettant un engagement étanche avec une surface cylindrique complémentaire définie sur un second élément de corps (13).

5. Un anneau de garniture selon la revendication 3 ou 4, caractérisé en ce que la partie de paroi latérale du premier élément de garniture (18) comprend une partie de surface inclinée s'étendant vers l'intérieur à partir de l'ouverture de la seconde rainure (20) vers ledit resserrement (22) de façon à définir une entrée de rainure semblable à un entonnoir.

6. Un anneau de garniture selon l'une des revendications 1 à 5, caractérisé en ce que le second élément de garniture (23) a été découpé à partir d'une longueur de matériau sous forme de feuillard.

7. Un anneau de garniture selon l'une des revendications 1 à 6, caractérisé en ce que ledit élément de corps (11) est un élément semblable à un piston.

Fig.1

Fig. 2

Fig.3